# EUROPEAN PATENT SPECIFICATION

(11) **EP 4 088 385 B1**
(45) Date of publication and mention of the grant of the patent: **21.10.2026**
(21) Application number: 21703104.6
(22) Date of filing: 08.01.2021
(51) Int. Cl.: H04B 3/23, H04B 3/32

(54) **DISTRIBUTED DYNAMIC POWER SAVINGS FOR ADAPTIVE FILTERS IN A HIGH-SPEED DATA CHANNEL**
VERTEILTE DYNAMISCHE LEISTUNGSEINSPARUNG FÜR ADAPTIVE FILTER IN EINEM HOCHGESCHWINDIGKEITSDATENKANAL
ÉCONOMIES D'ÉNERGIE DYNAMIQUES DISTRIBUÉES POUR FILTRES ADAPTATIFS DANS UN CANAL DE DONNÉES À GRANDE VITESSE

(30) Priority: 10.01.2020 US 202062959682 P; 19.02.2020 US 202062978689 P
(43) Date of publication of application: 16.11.2022
(73) Proprietor: Marvell Asia Pte, Ltd., Singapore 369522 (SG)
(72) Inventor: SHEN, David, Saratoga, California 95070 (US); WEISS, Oliver, 41564 Kaarst (DE)
(74) Representative: Grünecker Patent- und Rechtsanwälte PartG mbB
(86) International application number: PCT/US2021/012595
(87) International publication number: WO 2021/142189

(56) References cited:
- EP-A1- 0 333 718
- EP-A1- 0 333 718
- EP-B1- 0 333 718
- US-A1- 2007 280 388
- US-A1- 2007 280 388

## Description

### Cross Reference to Related Applications

This disclosure claims the benefit of copending, commonly-assigned United States Provisional Patent Applications Nos. 62/959,682, filed January 10, 2020, and 62/978,689, filed February 19, 2020.

### Field of Use

This disclosure relates to the use of adaptive filters for equalization of a high-speed data channel. More particularly, this disclosure relates to the dynamic powering down and powering up of segments of adaptive filters in response to dynamic changes in the channel being filtered.

### Background

The background description provided herein is for the purpose of generally presenting the context of the disclosure. Work of the inventors hereof, to the extent the work is described in this background section, as well as aspects of the description that may not otherwise qualify as prior art at the time of filing, are neither expressly nor impliedly admitted to be prior art against the subject matter of the present disclosure.

Physical layer (PHY) devices for high-speed wireline serial communications, such as 1000 Base-T or 10G Base-T lines, typically use adaptive filters for equalization, including cancellation of echo, crosstalk and/or radiofrequency (RF) interference. A typical adaptive filter may include echo cancellation (EC) circuitry, near-end crosstalk (NEXT) cancellation circuitry, and/or far-end crosstalk (FEXT) cancellation circuitry. The adaptive filter may have a plurality of taps, with each tap covering a segment of the cancellation circuitry, corresponding to a respective segment of the wireline link. The coefficients of each segment are adapted with an algorithm such as, e.g., least-mean-squares, to maximize the effectiveness of the cancellation circuity. However, in typical cancellation scenarios, the crosstalk or echo points are localized at certain sections along a particular cable. This means that there are also segments along the cable that do not have significant crosstalk or echo. As a result, power is wasted in running and updating some filter segments that may not be needed. The filter segments may have individual power-down capability, and one possible way to address the issue of running unnecessary filter segments is to power down (i.e., power OFF) those segments which have very low coefficient values. However, the powering down of such segments typically would be an irreversible process, because once a particular segment has been powered down, there would be no more information available from that segment to determine if a dynamic change in the channel -- which could be a result of environmental changes such as temperature or physical changes, such as bending of the cable -- has occurred that might require that the segment be powered back up (i.e., powered back ON) to deal with some newly-occurring interference .

EP 0 333 718 Al discloses an echo canceller for a transmission line, including a shift register having an input for receiving an input signal from a signal source and having a plurality of output taps for providing a plurality of equally spaced delayed signals. A tap coefficient storage memory stores a plurality of tap coefficients. A multiplier multiplies certain of the delayed signals by certain tap coefficients to produce multiplier outputs. A tap allocation circuit determines how many and which of the taps are to be turned ON so that its corresponding tap coefficients are multiplied by the multiplier. A subtracter cancels echoes by subtracting the multiplier outputs from signals received on the transmission line.

### Summary

It is the object of the present invention to provide an improved physical layer transceiver for connecting a host device to a wireline channel medium having a cable length, and an improved method of filtering interference in a physical layer transceiver for connecting a host device to a wireline channel medium having a cable length.

This object is solved by the subject matter of the independent claims which define the present invention.

Preferred embodiments of the present invention are defined by the dependent claims.

### Brief Description of the Drawings

Further features of the disclosure, its nature and various advantages, will be apparent upon consideration of the following detailed description, taken in conjunction with the accompanying drawings, in which like reference characters refer to like parts throughout, and in which:
FIG. 1 is a representation of an automotive Ethernet physical link in which an implementation of the subject matter of this disclosure may be used;
FIG. 2 is a representation of an enterprise Ethernet physical link in which an implementation of the subject matter of this disclosure may be used;
FIG. 3 is a modular diagram of a physical layer transceiver in accordance with implementations of the subject matter of this disclosure;
FIG. 4 shows an implementation of adaptive filter circuitry in accordance with implementations of the subject matter of this disclosure;
FIG. 5 is a representative graph of potential filter coefficients in the implementation of FIG. 4;
FIG. 6 shows an implementation of adaptive filter circuitry as in FIG. 4 with a first interleaved pattern of ON and OFF filter taps;
FIG. 7 shows an implementation of adaptive filter circuitry as in FIG. 4 with a second interleaved pattern of ON and OFF filter taps;
FIG. 8 is a flow diagram illustrating a power optimization technique in accordance with implementations of the subject matter of this disclosure; and
FIG. 9 is a flow diagram illustrating a method of operation in accordance with implementations of the subject matter of this disclosure.

### Detailed Description

As noted above, physical layer devices for high-speed wireline serial communications, such as 1000 Base-T or 10G Base-T lines, typically use adaptive filters for equalization, including cancellation of echo, crosstalk and/or RF interference. A typical adaptive filter may include echo cancellation circuitry to perform echo cancellation, near-end crosstalk cancellation circuitry to perform near-end crosstalk cancellation, and/or far-end crosstalk cancellation circuitry to perform far-end crosstalk cancellation. The adaptive filter may have a plurality of taps, with each tap covering a segment of the cancellation circuitry, corresponding to a respective segment of the wireline link. The coefficients of each segment are adapted with an algorithm such as, e.g., least-mean-squares, to maximize the effectiveness of the cancellation circuity. However, in typical cancellation scenarios, the crosstalk or echo points do not occur uniformly along a cable but rather are localized at certain sections along a specific cable deployment. As a result, power is wasted in running and updating some filter segments that may not be needed. The filter segments may have individual power-down capability, and one possible way to address the issue of running unnecessary filter segments this is to power down those segments which have very low coefficient values. However, the powering down of such segments would be an irreversible process, because once an particular segment has been powered down, there would no longer be any more information available to determine if a dynamic change in the channel has occurred that might require that the powered-down segment be powered back up to deal with some newly-occurring interference.

For example, the wireline connection in question may be a fixed cable in a data center which is normally under stable conditions. Under those conditions, large portions of the cable may be free of interference, while segments near connectors are more susceptible to interference. In theory, then, filter taps corresponding to the interference-free segments may be turned off. However, fluctuations in temperature, or physical movement ("cable shake") or bending (i.e., kinking) of the cable (e.g., by a technician working nearby) may change interference conditions on the cable to the point that it would be desirable to reactivate at least some of the filter taps that had been turned OFF, for cancellation of newly-arisen interference. But when filter taps turned OFF, there is no way to sense the new interference and determine a need to power ON those filter taps to mitigate the new interference. Instead, it would be necessary to shut down the wireline link altogether, so that it could be re-enabled with appropriate filter taps active in view of the current interference situation.

In another situation, the wireline connection in question may be an automotive Ethernet cable. In some scenarios, the cable may be subject to environmental changes, such as temperature changes, which are not necessarily uniform throughout the vehicle. Moreover, if the cable is poorly or not properly secured to the vehicle, the cable may move (including possibly bending or kinking) as the vehicle accelerates or road surface conditions change. If certain filter taps are deactivated because they correspond to segments that are stable when the link is established based on conditions at that time -- e.g., when the vehicle is stationary -- then when the conditions change and formerly stable segments become subject to interference, there is no way to sense to the new interference and power ON those filter taps to mitigate the new interference. Instead, it would be necessary to shut down the link altogether, so that it could be re-enabled with appropriate filter taps active in view of the current interference situation. However, shutting down an automotive system while a vehicle is being driven may not be feasible.

Therefore, in accordance with implementations of the subject matter of this disclosure, instead of completely shutting down entire blocks of the filter of a cable link (i.e., entire groups of taps corresponding to multiple contiguous segments of the cable link) , a "striped" approach is taken, in which filter taps corresponding to regularly-spaced cable segments are shut down. For example, every other filter tap may be shut down (i.e., a repeating pattern of "one ON, one OFF," such that both taps neighboring each ON tap that is not an end tap are OFF, and both taps neighboring each OFF tap that is not an end tap are ON), or two out of every three filter taps may be shut down (i.e., a repeating pattern of "one ON, two OFF," such that both taps neighboring each ON tap that is not an end tap are OFF, and each OFF tap that is not an end tap has a first neighboring tap that is ON and a second neighboring tap that is OFF). This "striped" approach to shutting down selected filter taps leaves enough active filter taps across a cable link that any new interference can be sensed. Not only can the filter taps that are powered-ON be used to filter the new interference, but the information regarding new interference in a region of the cable is used to power ON -- i.e., activate -- additional filter taps corresponding to that region of the cable, for filtering the new interference.

Moreover, the striping pattern can be applied on a block basis. That is, different striping patterns can be used for filter taps corresponding to different portions of the cable. For example, for filter taps corresponding to cable segments in the vicinity of any connector, every tap can be powered ON, while for taps corresponding to areas known to be well-connected to a vehicle frame (in an automotive case), or otherwise to be physically stable, all taps can be powered OFF because the occurrence of new interference is considered to be unlikely, but for taps corresponding to other portions of the cable where new interference is more likely (but still less likely than near a connector), every other tap or two of every three taps (or any other suitable pattern) can be powered OFF.

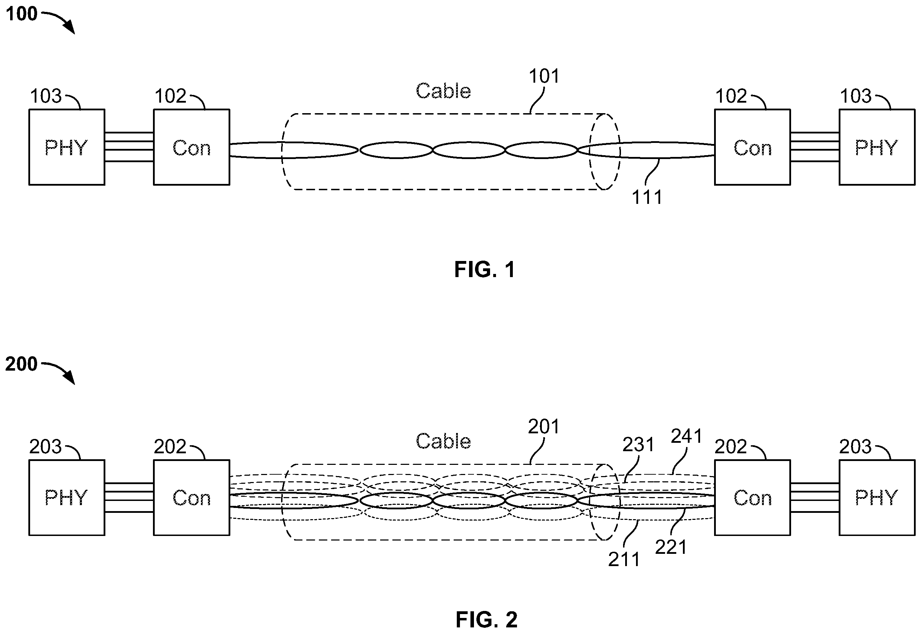

The subject matter of this disclosure may be better understood by reference to FIGS. 1-9.

Implementations of the subject matter of this disclosure may be found in the physical layer transceiver (PHY) of fixed, or "enterprise," Ethernet links, or in automotive Ethernet links.

An automotive Ethernet physical link 100 in which an implementation of the subject matter of this disclosure may be used is shown in FIG. 1, connecting two physical layer transceivers 103, one of which may be located in an electronic control unit (ECU) of a vehicle, and another of which may be located in a functional module of the vehicle. Each PHY 103 is connected via a respective connector 102 to channel medium 101 which, in this implementation, is a cable including a single twisted copper wire pair 111 (which may be shielded or unshielded).

An enterprise Ethernet physical link 200 in which an implementation of the subject matter of this disclosure may be used is shown in FIG. 2, connecting two physical layer transceivers 203, each of which may be located in a respective data processing or storage device. Each PHY 203 is connected via a respective connector 202 to channel medium 201 which, in this implementation, is a cable including four unshielded twisted copper wire pairs 211, 221, 231, 241.

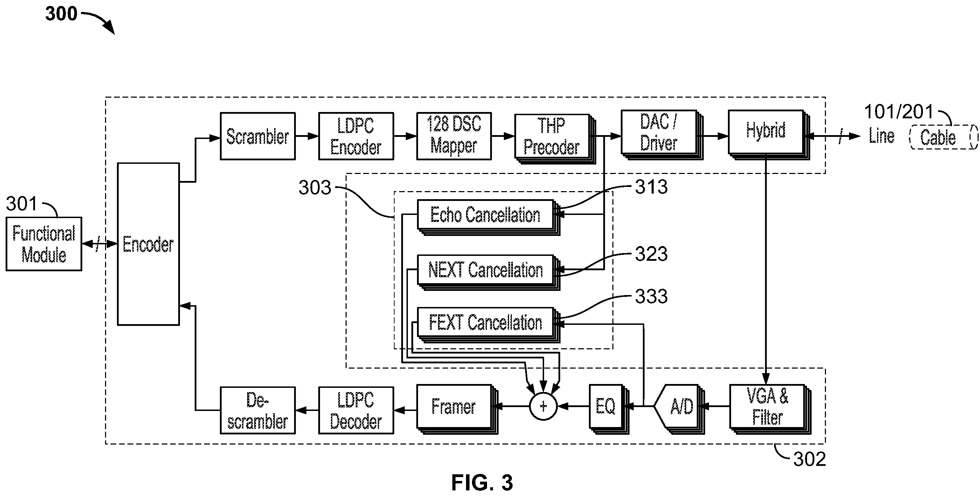

From the perspective of this disclosure, PHYs 103 and PHYs 203 are identical in relevant respects. An implementation of a PHY 300, shown in FIG. 3, may be used as either PHY 103 or PHY 203.

PHY 300 couples a host, such as functional module 301, which may be an automotive module, or a data processing or storage module of an enterprise system, to wireline channel medium (cable) 101/201, using well-known encoding and decoding circuitry 302. One or more of adaptive filters 303, including echo canceller(s) 313, NEXT canceller(s) 323 and FEXT canceller(s) 333, filter the effects of interference from echo and/or near-end crosstalk and/or far-end crosstalk, respectively.

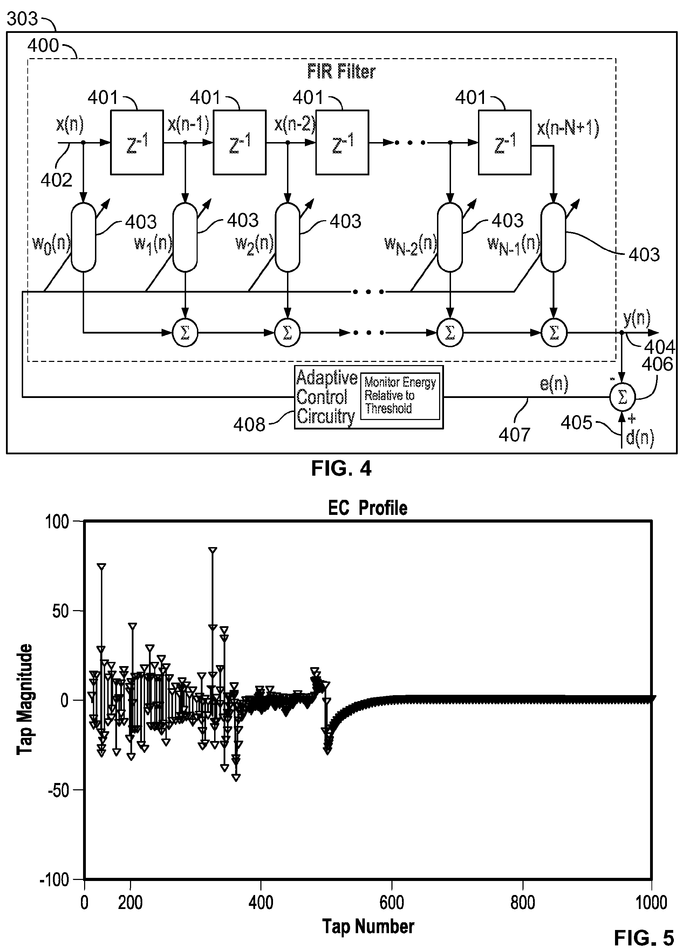

As shown in FIG. 4, one instance of adaptive filter circuitry 303 (which may be an echo canceller 313, a NEXT canceller 323 or a FEXT canceller 333), may be a finite impulse response (FIR) filter 400 having *N* stages (0,...,*N-1*) 401 operating on inputs *x(n) 402*, and having *N* corresponding taps *wᵢ(n),* (i=0,.*..,N-1*) 403. Estimates *y(n)* may be a measure (e.g., the sum of the squares) of total interference energy in the taps being monitored, and are output at 404 to a decoder (not shown) that provides decisions *d(n)* 405, which are compared to estimates *y(n)* 404 at 406 to yield error signals *e(n)* 407. Error signals *e(n)* 407 are used by adaptive control circuitry 408 to control taps 403, including adapting the coefficients of each tap 403, or turning a particular tap 403 ON or OFF.

Each tap 403 consumes power. However, the coefficients for many of taps 403 may be very small, and even close to 0. As shown in FIG. 5 (in which tap numbers are indicated on the abscissa and coefficient, or tap, magnitudes are indicated on the ordinate) for one example of an echo cancelling filter, taps numbered 300-400 and taps numbered 600-1000 have coefficients at or near 0. Therefore, such taps could be turned OFF to save power, but, as noted above, in typical adaptive filters, once a tap is turned OFF, it remains OFF until the link in question is disconnected and reestablished.

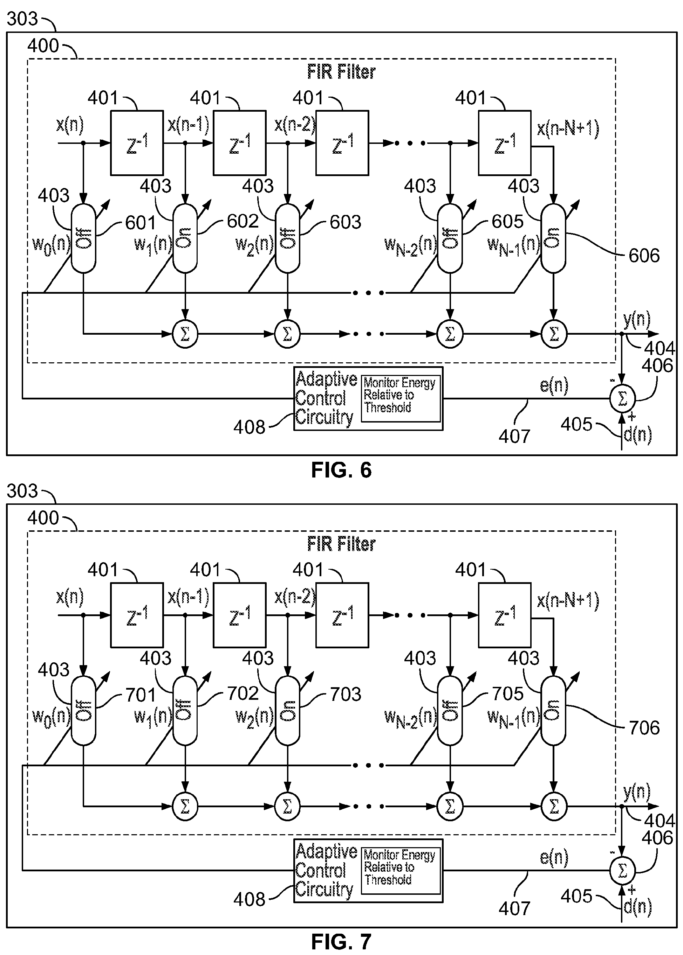

Therefore, in accordance with implementations of the subject matter of this disclosure, power may be saved without sacrificing the ability to turn a tap back ON, by "striping" the taps **--** i.e., turning OFF (powering down) taps **--** in a regular pattern. In an example that is shown only partially in FIG. 6, every other tap 403 is turned OFF, while the other ones of taps 403, interleaved with the taps that are turned OFF, remain ON (such that there is a repeating pattern of "one ON, one OFF," whereby both taps neighboring each ON tap that is not an end tap are OFF, and both taps neighboring each OFF tap that is not an end tap are ON). That is, of the taps visible in FIG. 6, taps 601, 603, 605 are turned OFF, while taps 602, 606 are turned on (although only five taps are shown in FIGS. 4 and 6, in practice there are several hundred taps (indeed, FIG. 5 displays coefficient values for 1,000 taps)). Although selected taps are powered OFF, e.g., to conserve power, because there are powered-ON taps close to every powered-OFF tap, if a new interference event occurs in the vicinity of a powered-OFF tap, that new interference event can be detected by a nearby powered-ON tap and the information regarding the interference event can be used to turn back on the powered-OFF tap or taps.

While FIG. 6 shows a portion of an example where every other tap is powered ON, meaning also that every other tap is powered OFF, other interleaved patterns of taps may be used. Thus, FIG. 7 shows a portion of an example of a pattern of taps in which only one in three taps (703, 706) is powered ON, while two out of three taps (701, 702, 705) are powered OFF. Alternatively (not shown), one in three taps could be powered OFF, while two out of three taps are powered ON. Although a one-in-three ON pattern provides less coverage of OFF taps, there is still at least one ON tap next to each OFF tap to sense interference in the segment covered by the OFF tap and determine a need to reactivate the OFF tap. Still further patterns may be used with even sparser coverage, as long as the ON taps are not so far from any OFF tap that new interference at that OFF tap could not be detected, as determined by the spatial resolution of the taps compared to the cable impairment that gives rise to the interference. For example, for taps that spatially represent every 10 cm of the cable, turning off every other tap will decrease the spatial resolution to every 20 cm of the cable. Impairments such as cable bend would need to be within the spatial resolution of the tap to be detectable.

Although the "striping" patterns of FIGS. 6 and 7 are uniform -- 1 in 2, 1 in 3 **--** in actual implementations a uniform distribution of active or powered-ON taps may not be appropriate. As noted above, a large number of active taps may be needed for segments corresponding to cable regions near connectors. On the other hand, for segments corresponding to a stable cable portion away from connectors, very few if any active taps may be needed, and therefore only a small number should be kept active to detect, in accordance with the subject matter of this disclosure, potential changes in interference conditions that might signal that more taps should be activated. Indeed, in the example of FIG. 5, large numbers of active taps appear to be needed between tap and tap 300, and smaller number appear to be needed between tap 400 and tap 600, but very few appear to be needed between tap 300 and tap 400 and even fewer appear to be needed between tap 600 and tap 1000.

Therefore, in accordance with implementations of the subject matter of this disclosure, filter taps corresponding to segments of a wireline channel medium (i.e., cable) are subdivided into blocks of taps corresponding to different portions of the cable. Thus, one striping pattern which may have very few taps powered down may be used in a block corresponding to segments near a connector, while a different striping pattern which may have very few taps powered ON may be used in a block corresponding to segments far from a connector. The different patterns of FIGS. 6 and 7 may be examples of different patterns in two different blocks of the same cable, respectively having a first proportion of taps powered ON and a second proportion of taps powered ON. Although the differences between pattern 600 and pattern 700 may be small, the differences between patterns in different blocks may be more significant depending on the actual interference conditions.

While it may be possible to control individual taps, powering ON, for example, a single tap or a small number of taps based on interference data from nearby taps, one technique for controlling the taps may be to measure the interference energy in the active taps. Thus, at initialization of a link, all taps could be active, and the interference energy in the taps can be measured and totaled. If, after initial filter training has been completed, the total interference energy in the taps in a block is below a first threshold, then a striping pattern of tap deactivations is applied to that block. The particular pattern applied could be based on the probability of encountering interference based on, e.g., proximity to a connector or other cable deployment characteristics. Alternatively, the same striping pattern could be used for every block. Once the striping pattern has been applied to a block, the interference energy in the active taps in that block continues to be monitored and, if the interference energy in the active taps, as represented by the estimates *y(n),* rises above a second threshold (which may be higher than the first threshold), then an interference event is inferred and the inactive taps in the block are reactivated.

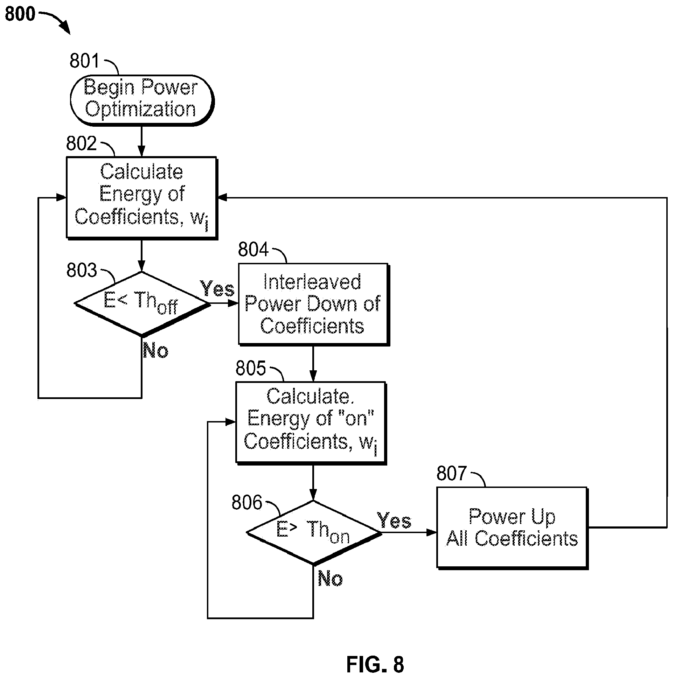

The foregoing power optimization technique 800, which may be performed by adaptive control circuitry 408, is diagrammed in FIG. 8 and begins at 801. At 802, the total interference energy (*E*) in the taps/coefficients *wᵢ* that are currently operating (powered ON) is determined (e.g., from the sum of the squares of the active coefficients).

At 803, it is determined whether the total interference energy (*E*) is below the aforementioned first threshold (*TH_{off}*) for powering down some of the active taps/ coefficients (*wᵢ*). If not, flow returns to 802 to continue monitoring the total interference energy (E). But if at 803, it is determined that the total interference energy (*E*) is below the aforementioned first threshold (*TH_{off}*) for powering down some of the active taps/coefficients (*wᵢ*), then the interference is very low and at 804, powering down of certain taps/coefficients (*wᵢ*), according to a pattern such as one of the patterns described above, is performed.

At 805, the total interference energy (E) in the taps/coefficients *wᵢ* that remain operating (powered ON) continues to be determined. At 806, it is determined whether the total interference energy (*E*) is above the aforementioned second threshold (*THₒₙ*) for powering ON the taps/coefficients (*wᵢ*) that have been powered OFF. If not, then interference remains low and flow returns to 805 to continue monitoring the total interference energy (*E*) in the taps/coefficients *wᵢ* that remain operating. But if at 806, it is determined that the total interference energy (*E*) is above the aforementioned second threshold (*THₒₙ*) for powering ON the taps/coefficients (*wᵢ*) that have been powered OFF, then at 807 all taps/coefficients (*wᵢ*) that had been powered OFF are powered back ON, and flow returns to 802 to continue monitoring the total interference energy (*E*) in the taps/coefficients *wᵢ* that are operating.

Although in method 800 there is only one OFF threshold and one ON threshold, there could be multiple thresholds (not shown) so that there could be not only situations where all taps/coefficients *wᵢ* are powered ON or a predetermined subset of taps/coefficients *wᵢ* that are powered OFF, but instead there could be different subsets of taps/coefficients *wᵢ* of different subset sizes that are powered OFF depending on the degree of interference as measured by the total interference energy (*E*).

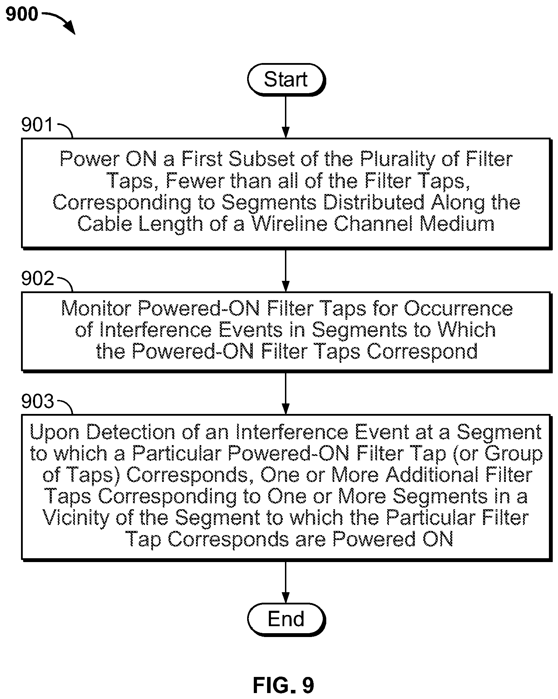

More generally, a method 900 (FIG. 9) according to implementations of the subject matter of this disclosure begins at 901, where a first subset of the plurality of filter taps, fewer than all of the filter taps, corresponding to segments distributed along the cable length of a wireline channel medium, are powered ON. This could be the result of a design decision that the system would be initially powered ON with that subset of filter taps active, or could be the result of the system initially being powered ON with all filter taps, with some of the filter taps having subsequently been powered OFF based on a measurement of interference below a threshold as at 803.

At 902, powered-ON filter taps are monitored for occurrence of interference events in segments to which the powered-ON filter taps correspond. As noted above, this monitoring is based on total interference energy, and is performed on a per-block basis, with different blocks of filter taps being monitored separately (and potentially being subject to different thresholds).

At 903, upon detection at 902 of an interference event at a segment to which a particular powered-ON filter tap (or group of taps) corresponds, one or more additional filter taps corresponding to one or more segments in a vicinity of the segment to which the particular filter tap corresponds are powered ON, and method 900 ends.

Thus it is seen that the dynamic powering down and powering up of segments of adaptive filters in response to dynamic changes in the channel being filtered, thereby conserving power, has been provided.

As used herein and in the claims which follow, the construction "one of A and B" shall mean "A or B."

It is noted that the foregoing is only illustrative of the invention, and that the invention can be practiced by other than the described embodiments, which are presented for purposes of illustration and not of limitation, and the present invention is limited only by the claims which follow.

## Claims

1. A physical layer transceiver for connecting a host device (301) to a wireline channel medium (101/201) having a cable length, the physical layer transceiver comprising:
a host interface for coupling to the host device (301);
a line interface for coupling to the wireline channel medium (101/201);
encoding/decoding circuitry (302) operatively coupled to the host interface and the line interface for interfacing between the host device (301) and the wireline channel medium (101/201); and
adaptive filter circuitry (303) operatively coupled to the encoding/decoding circuitry (302), the adaptive filter circuitry (303) comprising:
a plurality of filter taps (403), each filter tap in the plurality of filter taps (403) corresponding to a segment of the cable length of the wireline channel medium (101/201), and being capable of being powered ON and OFF separately from each other filter tap in the plurality of filter taps (403), the plurality of filter taps (403) being subdivided corresponding to different blocks along the cable length of the wireline channel medium (101/201), and
adaptive control circuitry (408) configured to, after initial filter training:
power ON a first subset of the plurality of filter taps (403), fewer than all of the filter taps (403), corresponding to segments distributed along the cable length of the wireline channel medium (101/201),
monitor powered-ON filter taps (403) for occurrence of new interference events by monitoring, on a per-block basis, a total interference energy in the powered-ON filter taps in each block, and
upon detection of a new interference event at a segment to which a particular powered-ON filter tap corresponds, power ON one or more additional powered-OFF filter taps (403) corresponding to one or more segments in a vicinity of the segment to which the particular filter tap corresponds, wherein the new interference event is detected in response to the monitored total interference energy in the block to which the particular powered-ON filter tap corresponds rising above a threshold.

2. The physical layer transceiver of claim 1 wherein the adaptive control circuitry (408) is configured to initially power ON, as the first subset of the plurality of filter taps (403), filter taps corresponding to segments that are distributed along the cable length of the wireline channel medium (101/201).

3. The physical layer transceiver of claim 2 wherein the adaptive control circuitry (408) is configured to initially power ON, as the first subset of the plurality of filter taps (403), every other filter tap, corresponding to every other segment along the cable length of the wireline channel medium (101/201), wherein both taps neighboring each ON tap that is not an end tap are OFF, and both taps neighboring each OFF tap that is not an end tap are ON; or wherein the adaptive control circuitry (408) is configured to initially power ON, as the first subset of the plurality of filter taps (403), every third filter tap, corresponding to every third segment along the cable length of the wireline channel medium, wherein both taps neighboring each ON tap that is not an end tap are OFF, and each OFF tap that is not an end tap has a first neighboring tap that is ON and a second neighboring tap that is OFF.

4. The physical layer transceiver of one of claims 1 to 3 wherein the adaptive control circuitry (408) is configured to initially power ON, as the first subset of the plurality of filter taps (403), different distributions of filter taps corresponding to the different blocks along the cable length of the wireline channel medium (101/201).

5. The physical layer transceiver of claim 4 wherein the different distributions of powered-ON filter taps corresponding to the different blocks comprise:
a first proportion of powered-ON filter taps corresponding to a block having a first susceptibility to interference; and
a second proportion, greater than the first proportion, of powered-ON filter taps corresponding to a block having a second susceptibility, greater than the first susceptibility, to interference.

6. The physical layer transceiver of claim 5 wherein the different distributions of powered-ON filter taps corresponding to the different blocks comprise:
the first proportion of powered-ON filter taps, wherein the first proportion of powered-ON filter taps corresponds to a block of segments in a portion of the wireline channel medium (101/201) remote from a connector; and
the second proportion of powered-ON filter taps, wherein the second proportion of powered-ON filter taps corresponds to a block of segments in a portion of the wireline channel medium (101/201) adjacent to a connector.

7. The physical layer transceiver of claim 5 wherein the different distributions of powered-ON filter taps corresponding to the different blocks comprise:
the first proportion of powered-ON filter taps, wherein the first proportion of powered-ON filter taps corresponds to a block of segments in a portion of the wireline channel medium (101/201) that is not subject to changes in temperature; and
the second proportion of powered-ON filter taps, wherein the second proportion of powered-ON filter taps corresponds to a block of segments in a portion of the wireline channel medium (101/201) that is subject to changes in temperature.

8. The physical layer transceiver of claim 5 wherein the different distributions of powered-ON filter taps corresponding to the different blocks comprise:
the first proportion of powered-ON filter taps, wherein the first proportion of powered-ON filter taps corresponds to a block of segments in a portion of the wireline channel medium (101/201) that is not subject to physical disturbance; and
the second proportion of powered-ON filter taps, wherein the second proportion of powered-ON filter taps corresponds to a block of segments in a portion of the wireline channel medium (101/201) that is subject to physical bending.

9. The physical layer transceiver of claim 8 wherein:
the physical layer transceiver is for use in an automotive Ethernet system in which the wireline channel medium (101/201) is an automotive Ethernet cable in a vehicle; and
the different distributions of powered-ON filter taps corresponding to the different blocks comprise:
the first proportion of powered-ON filter taps, wherein the first proportion of powered-ON filter taps corresponds to a block of segments in a portion of the automotive Ethernet cable that is well-secured to the vehicle, and
the second proportion of powered-ON filter taps, wherein the second proportion of powered-ON filter taps corresponds to a block of segments in a portion of the automotive Ethernet cable that is poorly secured to the vehicle.

10. The physical layer transceiver of one of claims 1 to 9 wherein the adaptive control circuitry (408) is further configured to:
upon lack of detection, after a predetermined time period has elapsed, of an interference event in segments to which a group of filter taps that are powered-ON correspond, power OFF one or more filter taps in the group of filter taps; and/or
wherein the adaptive control circuitry (408) is configured to:
power OFF the one or more filter taps in a group of filter taps that are powered-ON, when total interference energy of filter taps in the group of filter taps that are powered-ON falls below a first predetermined threshold, wherein the group of filter taps is within a block of filter taps; and
power ON one or more additional filter taps in the vicinity of the particular filter tap when total interference energy of filter taps in the group of filter taps of a block of filter taps including the particular filter tap, corresponding to segments in the vicinity of the segment to which the particular filter tap corresponds, that are powered-ON, exceeds a second predetermined threshold greater than the first predetermined threshold.

11. A method (900) of filtering interference in a physical layer transceiver for connecting a host device to a wireline channel medium having a cable length, and having adaptive filter circuitry including a plurality of filter taps, each filter tap in the plurality of filter taps corresponding to a segment of the cable length of the wireline channel medium, and being separately controllable from each other filter tap in the plurality of filter taps, , the plurality of filter taps being subdivided corresponding to different blocks along the cable length of the wireline channel medium, the method (900) comprising, after initial filter training:
powering ON (901) a first subset of the plurality of filter taps, fewer than all of the filter taps, corresponding to segments distributed along the cable length of the wireline channel medium;
monitoring (902) powered-ON filter taps for occurrence of new interference events in segments to which the powered-ON filter taps correspond by monitoring, on a per-block basis, a total interference energy in the powered-ON filter taps in each block; and
upon detection of a new interference event at a segment to which a particular powered-ON (903) filter tap corresponds, powering ON one or more additional powered-OFF filter taps corresponding to one or more segments in a vicinity of the segment to which the particular filter tap corresponds, wherein the new interference event is detected in response to the monitored total interference energy in the block to which the particular powered-ON filter tap corresponds rising above a threshold.

12. The method (900) of claim 11 wherein initially powering ON (901) the first subset of the plurality of filter taps comprises initially powering ON, as the first subset of the plurality of filter taps, filter taps corresponding to segments distributed along the cable length of the wireline channel medium.

13. The method (900) of claim 11 wherein initially powering ON (901) the first subset of the plurality of filter taps comprises initially powering ON, as the first subset of the plurality of filter taps, different distributions of filter taps corresponding to segments in the different blocks along the cable length of the wireline channel medium.

14. The method (900) of claim 11 wherein initially powering ON (901), as the first subset of the plurality of filter taps, different distributions of filter taps corresponding to segments in the different blocks along the cable length of the wireline channel medium, comprises: powering ON a first proportion of filter taps corresponding to segments in a block having a first susceptibility to interference; and powering ON a second proportion, greater than the first proportion, of filter taps corresponding to segments in a block having a second susceptibility, greater than the first susceptibility, to interference.

15. The method (900) of claim 11, further comprising, upon lack of detection, after a predetermined time period has elapsed, of an interference event in segments to which a group of filter taps that are powered-ON correspond, powering OFF one or more filter taps in the group of filter taps; and/or further comprising:
powering OFF the one or more filter taps in a group of filter taps when total interference energy of filter taps in the group of filter taps that are powered-ON falls below a first predetermined threshold, wherein the group of filter taps is within a block of filter taps; and
powering ON the one or more additional filter taps corresponding to segments in the vicinity of the segment to which the particular filter tap corresponds when total interference energy of filter taps in the group of filter taps of a block of filter taps including the particular filter tap corresponding to segments in the vicinity of the segment to which the particular filter tap corresponds, that are powered-ON, exceeds a second predetermined threshold greater than the first predetermined threshold.

## Patentansprüche

1. Bitübertragungsschicht-Sender/Empfänger zum Verbinden einer Hostvorrichtung (301) mit einem drahtgebundenen Kanalmedium (101/201) mit einer Kabellänge, wobei der Bitübertragungsschicht-Sender/Empfänger umfasst:
eine Hostschnittstelle zum Koppeln mit der Hostvorrichtung (301);
eine Leitungsschnittstelle zum Koppeln mit dem drahtgebundenen Kanalmedium (101/201); und;
eine Codier-/Decodierschaltung (302), die wirksam mit der Hostschnittstelle und der Leitungsschnittstelle gekoppelt ist, um eine Schnittstelle zwischen der Hostvorrichtung (301) und dem drahtgebundenen Kanalmedium (101/201) herzustellen; und
eine adaptive Filterschaltung (303), die wirksam mit der Codier-/Decodierschaltung (302) gekoppelt ist, wobei die adaptive Filterschaltung (303) umfasst:
eine Vielzahl von Filterabzweigungen (403), wobei jede Filterabzweigung in der Vielzahl von Filterabzweigungen (403) einem Segment der Kabellänge des drahtgebundenen Kanalmediums (101/201) entspricht und separat von jeder anderen Filterabzweigung der Vielzahl von Filterabzweigungen (403) ein- und ausgeschaltet werden kann, wobei die Vielzahl von Filterabzweigungen (403) entsprechend verschiedenen Blöcken entlang der Kabellänge des drahtgebundenen Kanalmediums (101/201) unterteilt ist, und
eine adaptive Steuerschaltung (408), ausgebildet zum, nach dem Anfangsfiltertraining:
Einschalten einer ersten Teilmenge der Vielzahl von Filterabzweigungen (403), die weniger als alle Filterabzweigungen (403) umfasst, entsprechend Segmenten, die entlang der Kabellänge des drahtgebundenen Kanalmediums (101/201) verteilt sind,
Überwachen von eingeschalteten Filterabzweigungen (403) auf das Auftreten neuer Interferenzereignisse durch Überwachen einer Gesamtinterferenzenergie auf einer Pro-Block-Basis in den eingeschalteten Filterabweichungen in jedem Block, und
bei Erfassen eines neuen Interferenzereignisses in einem Segment, dem eine bestimmte eingeschaltete Filterabzweigung entspricht, Einschalten von einer oder mehreren zusätzlichen ausgeschalteten Filterabzweigungen (403) entsprechend einem oder mehreren Segmenten in der Nähe des Segments, dem die bestimmte Filterabzweigung entspricht, wobei das neue Interferenzereignis als Reaktion darauf erfasst wird, dass die überwachte Gesamtinterferenzenergie im Block, dem die bestimmte eingeschaltete Filterabzweigung entspricht, über eine Schwelle ansteigt.

2. Bitübertragungsschicht-Sender/Empfänger nach Anspruch 1, wobei die adaptive Steuerschaltung (408) zum anfänglichen Einschalten von Filterabzweigungen entsprechend Segmenten, die entlang der Kabellänge des drahtgebundenen Kanalmediums (101/201) verteilt sind, als die erste Teilmenge der Vielzahl von Filterabzweigungen (403) ausgebildet ist.

3. Bitübertragungsschicht-Sender/Empfänger nach Anspruch 2, wobei die adaptive Steuerschaltung (408) zum anfänglichen Einschalten von jeder anderen Filterabzweigung entsprechend jedem anderen Segment entlang der Kabellänge des drahtgebundenen Kabelmediums (101/201) als die erste Teilmenge der Vielzahl von Filterabzweigungen (403) ausgebildet ist, wobei beide Abzweigungen, die jeder Ein-Abzweigung benachbart sind, die keine Endabzweigung ist, ausgeschaltet sind, und beide Abzweigungen, die jeder Aus-Abzweigung benachbart sind, die keine Endabzweigung ist, eingeschaltet sind; oder
wobei die adaptive Steuerschaltung (408) zum anfänglichen Einschalten von jeder dritten Filterabzweigung entsprechend jedem dritten Segment entlang der Kabellänge des drahtgebundenen Kabelmediums als die erste Teilmenge der Vielzahl von Filterabzweigungen (403) ausgebildet ist, wobei beide Abzweigungen, die jeder Ein-Abzweigung benachbart sind, die keine Endabzweigung ist, ausgeschaltet sind, und jede Aus-Abzweigung, die keine Endabzweigung ist, eine erste benachbarte Abzweigung, die eingeschaltet ist, und eine zweite Abzweigung, die ausgeschaltet ist, aufweist.

4. Bitübertragungsschicht-Sender/Empfänger nach einem der Ansprüche 1 bis 3, wobei die adaptive Steuerschaltung (408) zum anfänglichen Einschalten von verschiedenen Unterteilungen von Filterabzweigungen entsprechend den verschiedenen Blöcken entlang der Kabellänge des drahtgebundenen Kanalmediums (101/201) als die erste Teilmenge der Vielzahl von Filterabzweigungen (403) ausgebildet ist.

5. Bitübertragungsschicht-Sender/Empfänger nach Anspruch 4, wobei die verschiedenen Unterteilungen von eingeschalteten Filterabzweigungen entsprechend den verschiedenen Blöcken umfassen:
einen ersten Anteil von eingeschalteten Filterabzweigungen entsprechend einem Block mit einer ersten Wahrscheinlichkeit der Interferenz; und
einen zweiten Anteil, größer als der erste Anteil, von eingeschalteten Filterabzweigungen entsprechend einem Block mit einer zweiten Wahrscheinlichkeit, größer als die erste Wahrscheinlichkeit, der Interferenz.

6. Bitübertragungsschicht-Sender/Empfänger nach Anspruch 5, wobei die verschiedenen Unterteilungen von eingeschalteten Filterabzweigungen entsprechend den verschiedenen Blöcken umfassen:
den ersten Anteil von eingeschalteten Filterabzweigungen, wobei der erste Anteil von eingeschalteten Filterabzweigungen einem Block von Segmenten in einem von einem Verbinder entfernten Abschnitt des drahtgebundenen Kanalmediums (101/201) entspricht; und
den zweiten Anteil von eingeschalteten Filterabzweigungen, wobei der zweite Anteil von eingeschalteten Filterabzweigungen einem Block von Segmenten in einem an den Verbinder angrenzenden Abschnitt des drahtgebundenen Kanalmediums (101/201) entspricht.

7. Bitübertragungsschicht-Sender/Empfänger nach Anspruch 5, wobei die verschiedenen Unterteilungen von eingeschalteten Filterabzweigungen entsprechend den verschiedenen Blöcken umfassen:
den ersten Anteil von eingeschalteten Filterabzweigungen, wobei der erste Anteil von eingeschalteten Filterabzweigungen einem Block von Segmenten in einem von einem Verbinder entfernten Abschnitt des drahtgebundenen Kanalmediums (101/201), der keinen Temperaturänderungen unterliegt, entspricht; und
den zweiten Anteil von eingeschalteten Filterabzweigungen, wobei der zweite Anteil von eingeschalteten Filterabzweigungen einem Block von Segmenten in einem von einem Verbinder entfernten Abschnitt des drahtgebundenen Kanalmediums (101/201), der Temperaturänderungen unterliegt, entspricht.

8. Bitübertragungsschicht-Sender/Empfänger nach Anspruch 5, wobei die verschiedenen Unterteilungen von eingeschalteten Filterabzweigungen entsprechend den verschiedenen Blöcken umfassen:
den ersten Anteil von eingeschalteten Filterabzweigungen, wobei der erste Anteil von eingeschalteten Filterabzweigungen einem Block von Segmenten in einem von einem Verbinder entfernten Abschnitt des drahtgebundenen Kanalmediums (101/201), der keinen physikalischen Störungen unterliegt, entspricht; und
den zweiten Anteil von eingeschalteten Filterabzweigungen, wobei der zweite Anteil von eingeschalteten Filterabzweigungen einem Block von Segmenten in einem von einem Verbinder entfernten Abschnitt des drahtgebundenen Kanalmediums (101/201), der einer physikalischen Biegung unterliegt, entspricht.

9. Bitübertragungsschicht-Sender/Empfänger nach Anspruch 8, wobei:
der Bitübertragungsschicht-Sender/Empfänger in einem Kraftfahrzeug-Ethernet-System vorgesehen ist, bei dem das drahtgebundene Kanalmedium (101/201) ein Kraftfahrzeug-Ethernet-Kabel in einem Fahrzeug ist; und
die verschiedenen Unterteilungen von eingeschalteten Filterabzweigungen entsprechend den verschiedenen Blöcken umfassen:
den ersten Anteil von eingeschalteten Filterabzweigungen, wobei der erste Anteil von eingeschalteten Filterabzweigungen einem Block von Segmenten in einem Abschnitt des Kraftfahrzeug-Ethernet-Kabels, der gut am Fahrzeug befestigt ist, entspricht, und
den zweiten Anteil von eingeschalteten Filterabzweigungen, wobei der zweite Anteil von eingeschalteten Filterabzweigungen einem Block von Segmenten in einem Abschnitt des Kraftfahrzeug-Ethernet-Kabels, der schlecht am Fahrzeug befestigt ist, entspricht.

10. Bitübertragungsschicht-Sender/Empfänger nach einem der Ansprüche 1 bis 9, wobei die adaptive Steuerschaltung (408) ferner ausgebildet ist zum:
falls nach Ablauf eines vorbestimmten Zeitraums kein Interferenzereignis in Segmenten festgestellt wird, denen eine Gruppe von eingeschalteten Filterzweigen entspricht, Ausschalten von einer oder mehreren Filterabzweigungen in der Gruppe von Filterabzweigungen; und/oder
wobei die adaptive Filterschaltung (408) ausgebildet ist zum:
Ausschalten der einen oder der mehreren Filterabzweigungen in einer Gruppe von eingeschalteten Filterabzweigungen, wenn die Gesamtinterferenzenergie von Filterabzweigungen in der Gruppe von Filterabzweigungen, die eingeschaltet sind, unter eine erste vorbestimmte Schwelle abfällt, wobei sich die Gruppe von Filterabzweigungen in einem Block von Filterabzweigungen befindet; und
Einschalten von einer oder mehreren zusätzliche Filterabzweigungen in der Nähe der bestimmten Filterabzweigung, wenn die Gesamtinterferenzenergie von Filterabzweigungen in der Gruppe von Filterabzweigungen eines Blocks von Filterabzweigungen, der die bestimmte Filterabzweigung umfasst, entsprechend Segmenten in der Nähe des Segments, dem die bestimmte Filterabzweigung entspricht, die eingeschaltet sind, einen zweite vorbestimmte Schwelle überschreitet, der größer ist als die erste vorbestimmte Schwelle.

11. Verfahren (900) zum Filtern von Interferenz in einem Bitübertragungsschicht-Sender/Empfänger zum Verbinden einer Hostvorrichtung mit einem kabelgebundenen Kanalmedium mit einer Kabellänge und einer adaptiven Filterschaltung, die eine Vielzahl von Filterabzweigungen umfasst, wobei jede Filterabzweigung in der Vielzahl von Filterabzweigungen einem Segment der Kabellänge des kabelgebundenen Kanalmediums entspricht und separat von jeder anderen Filterabzweigung in der Vielzahl von Filterabzweigungen steuerbar ist, wobei die Vielzahl von Filterabzweigungen entsprechend verschiedenen Blöcken entlang der Kabellänge des drahtgebundenen Kanalmediums unterteilt sind, wobei das Verfahren (900) nach einem anfänglichen Filtertraining umfasst:
Einschalten (901) einer ersten Teilmenge der Vielzahl von Filterabzweigungen, die weniger als alle Filterabzweigungen umfasst, entsprechend Segmenten, die entlang der Kabellänge des drahtgebundenen Kanalmediums verteilt sind,
Überwachen (902) von eingeschalteten Filterabzweigungen auf das Auftreten neuer Interferenzereignisse in Segmenten, denen die eingeschalteten Filterabzweigungen entsprechen, durch Überwachen einer Gesamtinterferenzenergie auf einer Pro-Block-Basis in den eingeschalteten Filterabweichungen in jedem Block; und
bei Erfassen eines neuen Interferenzereignisses in einem Segment, dem eine bestimmte eingeschaltete (903) Filterabzweigung entspricht, Einschalten von einer oder mehreren zusätzlichen ausgeschalteten Filterabzweigungen entsprechend einem oder mehreren Segmenten in der Nähe des Segments, dem die bestimmte Filterabzweigung entspricht, wobei das neue Interferenzereignis als Reaktion darauf erfasst wird, dass die überwachte Gesamtinterferenzenergie im Block, dem die bestimmte eingeschaltete Filterabzweigung entspricht, über eine Schwelle ansteigt.

12. Verfahren (900) nach Anspruch 11, wobei das anfängliche Einschalten (901) der ersten Teilmenge der Vielzahl von Filterabzweigungen das anfängliche Einschalten von Filterabzweigungen entsprechend Segmenten, die entlang der Kabellänge des drahtgebundenen Kanalmediums verteilt sind, als die erste Teilmenge der Vielzahl von Filterabzweigungen umfasst.

13. Verfahren (900) nach Anspruch 11, wobei das anfängliche Einschalten (901) der ersten Teilmenge der Vielzahl von Filterabzweigungen das anfängliche Einschalten von verschiedenen Verteilungen von Filterabzweigungen entsprechend Segmenten in den verschiedenen Blöcken entlang der Kabellänge des drahtgebundenen Kanalmediums als die erste Teilmenge der Vielzahl von Filterabzweigungen umfasst.

14. Verfahren (900) nach Anspruch 11, wobei das anfängliche Einschalten (901) von verschiedenen Verteilungen von Filterabzweigungen entsprechend Segmenten in den verschiedenen Blöcken entlang der Kabellänge des drahtgebundenen Kanalmediums als die erste Teilmenge der Vielzahl von Filterabzweigungen umfasst:
Einschalten eines ersten Anteils von Filterabzweigungen entsprechend Segmenten in einem Block mit einer ersten Wahrscheinlichkeit der Interferenz; und
Einschalten eines zweiten Anteils, größer als der erste Anteil, von Filterabzweigungen entsprechend Segmenten in einem Block mit einer zweiten Wahrscheinlichkeit, größer als die erste Wahrscheinlichkeit, der Interferenz.

15. Verfahren (900) nach Anspruch 11, ferner umfassend, falls nach Ablauf eines vorbestimmten Zeitraums kein Interferenzereignis in Segmenten festgestellt wird, denen eine Gruppe von eingeschalteten Filterzweigen entspricht, Ausschalten von einer oder mehreren Filterabzweigungen in der Gruppe von Filterabzweigungen; und/oder
ferner umfassend:
Ausschalten der einen oder der mehreren Filterabzweigungen in einer Gruppe von Filterabzweigungen, wenn die Gesamtinterferenzenergie von Filterabzweigungen in der Gruppe von Filterabzweigungen, die eingeschaltet sind, unter eine erste vorbestimmte Schwelle abfällt, wobei sich die Gruppe von Filterabzweigungen in einem Block von Filterabzweigungen befindet; und
Einschalten der einen oder der mehreren zusätzlichen Filterabzweigungen entsprechend Segmenten in der Nähe des Segments, dem die bestimmte Filterabzweigung, entspricht, wenn die Gesamtinterferenzenergie von Filterabzweigungen in der Gruppe von Filterabzweigungen eines Blocks von Filterabzweigungen, der die bestimmte Filterabzweigung umfasst, entsprechend Segmenten in der Nähe des Segments, dem die bestimmte Filterabzweigung entspricht, die eingeschaltet sind, einen zweite vorbestimmte Schwelle überschreitet, der größer ist als die erste vorbestimmte Schwelle.

## Revendications

1. Émetteur-récepteur de couche physique pour connecter un dispositif hôte (301) à un support de canal filaire (101/201) ayant une longueur de câble, l'émetteur-récepteur de couche physique comprenant :
une interface hôte pour le couplage au dispositif hôte (301) ;
une interface de ligne pour le couplage au support de canal filaire (101/201) ;
un ensemble de circuits de codage/décodage (302) couplé de manière fonctionnelle à l'interface hôte et à l'interface de ligne pour assurer l'interfaçage entre le dispositif hôte (301) et le support de canal filaire (101/201) ; et
un ensemble de circuits de filtre adaptatif (303) couplé de manière fonctionnelle à l'ensemble de circuits de codage/décodage (302), l'ensemble de circuits de filtre adaptatif (303) comprenant :
une pluralité de prises de filtre (403), chaque prise de filtre dans la pluralité de prises de filtre (403) correspondant à un segment de la longueur de câble du support de canal filaire (101/201) et étant capable d'être mise sous tension et hors tension indépendamment de chaque autre prise de filtre dans la pluralité de prises de filtre (403), la pluralité de prises de filtre (403) étant subdivisée de manière à correspondre à différents blocs sur la longueur de câble du support de canal filaire (101/201), et
un ensemble de circuits de commande adaptative (408) configuré pour, après un entraînement initial de filtre :
mettre sous tension un premier sous-ensemble de la pluralité de prises de filtre (403), représentant moins que la totalité des prises de filtre (403), correspondant à des segments répartis sur la longueur de câble du support de canal filaire (101/201),
surveiller les prises de filtre (403) mises sous tension pour détecter l'apparition de nouveaux événements d'interférence en surveillant, bloc par bloc, une énergie d'interférence totale dans les prises de filtre mises sous tension dans chaque bloc, et
lors de la détection d'un nouvel événement d'interférence au niveau d'un segment auquel correspond une prise de filtre particulière mise sous tension, mettre sous tension une ou plusieurs prises de filtre (403) supplémentaires mises hors tension correspondant à un ou plusieurs segments à proximité du segment auquel correspond la prise de filtre particulière, dans lequel le nouvel événement d'interférence est détecté en réponse au fait que l'énergie d'interférence totale surveillée dans le bloc auquel correspond la prise de filtre particulière mise sous tension dépasse un seuil.

2. Émetteur-récepteur de couche physique selon la revendication 1, dans lequel l'ensemble de circuits de commande adaptative (408) est configuré pour mettre sous tension initialement, comme étant le premier sous-ensemble de la pluralité de prises de filtre (403), des prises de filtre correspondant à des segments qui sont répartis sur la longueur de câble du support de canal filaire (101/201).

3. Émetteur-récepteur de couche physique selon la revendication 2, dans lequel l'ensemble de circuits de commande adaptative (408) est configuré pour mettre sous tension initialement, comme étant le premier sous-ensemble de la pluralité de prises de filtre (403), une prise de filtre sur deux, correspondant à un segment sur deux sur la longueur de câble du support de canal filaire (101/201), dans lequel les deux prises adjacentes à chaque prise sous tension qui n'est pas une prise d'extrémité sont hors tension, et les deux prises adjacentes à chaque prise hors tension qui n'est pas une prise d'extrémité sont sous tension ; ou
dans lequel l'ensemble de circuits de commande adaptative (408) est configuré pour mettre sous tension initialement, comme étant le premier sous-ensemble de la pluralité de prises de filtre (403), une prise de filtre sur trois, correspondant à un segment sur trois sur la longueur de câble du support de canal filaire, dans lequel les deux prises adjacentes à chaque prise sous tension qui n'est pas une prise d'extrémité sont hors tension, et chaque prise hors tension qui n'est pas une prise d'extrémité a une première prise adjacente qui est sous tension et une deuxième prise adjacente qui est hors tension.

4. Émetteur-récepteur de couche physique selon l'une des revendications 1 à 3, dans lequel l'ensemble de circuits de commande adaptative (408) est configuré pour mettre sous tension initialement, comme étant le premier sous-ensemble de la pluralité de prises de filtre (403), différentes répartitions de prises de filtre correspondant aux différents blocs sur la longueur de câble du support de canal filaire (101/201).

5. Émetteur-récepteur de couche physique selon la revendication 4, dans lequel les différentes répartitions de prises de filtre mises sous tension correspondant aux différents blocs comprennent :
une première proportion de prises de filtre mises sous tension correspondant à un bloc ayant une première sensibilité aux interférences ; et
une seconde proportion, supérieure à la première proportion, de prises de filtre mises sous tension correspondant à un bloc ayant une seconde sensibilité aux interférences, supérieure à la première sensibilité.

6. Émetteur-récepteur de couche physique selon la revendication 5, dans lequel les différentes répartitions de prises de filtre mises sous tension correspondant aux différents blocs comprennent :
la première proportion de prises de filtre mises sous tension, dans lequel la première proportion de prises de filtre mises sous tension correspond à un bloc de segments dans une partie du support de canal filaire (101/201) éloignée d'un connecteur ; et
la seconde proportion de prises de filtre mises sous tension, dans lequel la seconde proportion de prises de filtre mises sous tension correspond à un bloc de segments dans une partie du support de canal filaire (101/201) adjacente à un connecteur.

7. Émetteur-récepteur de couche physique selon la revendication 5, dans lequel les différentes répartitions de prises de filtre mises sous tension correspondant aux différents blocs comprennent :
la première proportion de prises de filtre mises sous tension, dans lequel la première proportion de prises de filtre mises sous tension correspond à un bloc de segments dans une partie du support de canal filaire (101/201) qui n'est pas soumise à des variations de température ; et
la seconde proportion de prises de filtre mises sous tension, dans lequel la seconde proportion de prises de filtre mises sous tension correspond à un bloc de segments dans une partie du support de canal filaire (101/201) qui est soumise à des variations de température.

8. Émetteur-récepteur de couche physique selon la revendication 5, dans lequel les différentes répartitions de prises de filtre mises sous tension correspondant aux différents blocs comprennent :
la première proportion de prises de filtre mises sous tension, dans lequel la première proportion de prises de filtre mises sous tension correspond à un bloc de segments dans une partie du support de canal filaire (101/201) qui n'est pas soumise à une perturbation physique ; et
la seconde proportion de prises de filtre mises sous tension, dans lequel la seconde proportion de prises de filtre mises sous tension correspond à un bloc de segments dans une partie du support de canal filaire (101/201) qui est soumise à une flexion physique.

9. Émetteur-récepteur de couche physique selon la revendication 8, dans lequel :
l'émetteur-récepteur de couche physique est destiné à être utilisé dans un système Ethernet automobile dans lequel le support de canal filaire (101/201) est un câble Ethernet automobile dans un véhicule ; et
les différentes répartitions de prises de filtre mises sous tension correspondant aux différents blocs comprennent :
la première proportion de prises de filtre mises sous tension, dans lequel la première proportion de prises de filtre mises sous tension correspond à un bloc de segments dans une partie du câble Ethernet automobile qui est solidement fixée au véhicule, et
la seconde proportion de prises de filtre mises sous tension, dans lequel la seconde proportion de prises de filtre mises sous tension correspond à un bloc de segments dans une partie du câble Ethernet automobile qui est faiblement fixée au véhicule.

10. Émetteur-récepteur de couche physique selon l'une des revendications 1 à 9, dans lequel l'ensemble de circuits de commande adaptative (408) est en outre configuré pour :
en l'absence de détection, après l'écoulement d'une période de temps prédéterminée, d'un événement d'interférence dans des segments auxquels correspond un groupe de prises de filtre qui sont mises sous tension, mettre hors tension une ou plusieurs prises de filtre dans le groupe de prises de filtre ; et/ou
dans lequel l'ensemble de circuits de commande adaptative (408) est configuré pour :
mettre hors tension la ou les plusieurs prises de filtre dans un groupe de prises de filtre qui sont mises sous tension lorsque l'énergie d'interférence totale des prises de filtre dans le groupe de prises de filtre qui sont mises sous tension tombe en dessous d'un premier seuil prédéterminé, dans lequel le groupe de prises de filtre est au sein d'un bloc de prises de filtre ; et
mettre sous tension une ou plusieurs prises de filtre supplémentaires à proximité d'une prise de filtre particulière lorsque l'énergie d'interférence totale des prises de filtre dans le groupe de prises de filtre d'un bloc prises de filtre incluant la prise de filtre particulière, correspondant à des segments à proximité du segment auquel correspond la prise de filtre particulière, qui sont mises sous tension dépasse un second seuil prédéterminé supérieur au premier seuil prédéterminé.

11. Procédé (900) de filtrage des interférences dans un émetteur-récepteur de couche physique pour connecter un dispositif hôte à un support de canal filaire ayant une longueur de câble, et ayant un ensemble de circuits de filtre adaptatif comprenant une pluralité de prises de filtre, chaque prise de filtre dans la pluralité de prises de filtre correspondant à un segment de la longueur de câble du support de canal filaire et pouvant être commandée indépendamment des autres prises de filtre dans la pluralité de prises de filtre, la pluralité de prises de filtre étant subdivisée de manière à correspondre à différents blocs sur la longueur de câble du support de canal filaire, le procédé (900) comprenant, après un entraînement initial de filtre :
la mise sous tension (901) d'un premier sous-ensemble de la pluralité de prises de filtre, représentant moins que la totalité des prises de filtre, correspondant à des segments répartis sur la longueur de câble du support de canal filaire ;
la surveillance (902) des prises de filtre mises sous tension pour détecter l'apparition de nouveaux événements d'interférence dans les segments auxquels correspondent les prises de filtre mises sous tension, en surveillant, bloc par bloc, une énergie d'interférence totale dans les prises de filtre mises sous tension dans chaque bloc ; et
lors de la détection d'un nouvel événement d'interférence au niveau d'un segment auquel correspond une prise de filtre particulière mise sous tension (903), la mise sous tension d'une ou plusieurs prises de filtre supplémentaires mises hors tension correspondant à un ou plusieurs segments à proximité du segment auquel correspond la prise de filtre particulière, dans lequel le nouvel événement d'interférence est détecté en réponse au fait que l'énergie d'interférence totale surveillée dans le bloc auquel correspond la prise de filtre particulière mise sous tension dépasse un seuil.

12. Procédé (900) selon la revendication 11, dans lequel la mise sous tension initiale (901) du premier sous-ensemble de la pluralité de prises de filtre comprend la mise sous tension initiale, comme étant le premier sous-ensemble de la pluralité de prises de filtre, de prises de filtre correspondant à des segments répartis sur la longueur de câble du support de canal filaire.

13. Procédé (900) selon la revendication 11, dans lequel la mise sous tension initiale (901) du premier sous-ensemble de la pluralité de prises de filtre comprend la mise sous tension initiale, comme étant le premier sous-ensemble de la pluralité de prises de filtre, de différentes répartitions de prises de filtre correspondant à des segments dans les différents blocs sur la longueur de câble du support de canal filaire.

14. Procédé (900) selon la revendication 11, dans lequel la mise sous tension initiale (901), comme étant le premier sous-ensemble de la pluralité de prises de filtre, de différentes répartitions de prises de filtre correspondant à des segments dans les différents blocs sur la longueur de câble du support de canal filaire, comprend :
la mise sous tension d'une première proportion de prises de filtre correspondant à des segments dans un bloc ayant une première sensibilité aux interférences ; et la mise sous tension d'une seconde proportion, supérieure à la première proportion, de prises de filtre correspondant à des segments dans un bloc ayant une seconde sensibilité aux interférences, supérieure à la première sensibilité.

15. Procédé (900) selon la revendication 11, comprenant en outre, en l'absence de détection, après l'écoulement d'une période de temps prédéterminée, d'un événement d'interférence dans des segments auxquels correspond un groupe de prises de filtre qui sont mises sous tension, la mise hors tension d'une ou plusieurs prises de filtre dans le groupe de prises de filtre ; et/ou
comprenant en outre :
la mise hors tension de la ou des plusieurs prises de filtre dans un groupe de prises de filtre lorsque l'énergie d'interférence totale des prises de filtre dans le groupe de prises de filtre qui sont mises sous tension tombe en dessous d'un premier seuil prédéterminé, dans lequel le groupe de prises de filtre est au sein d'un bloc de prises de filtre ; et
la mise sous tension de la ou des plusieurs prises de filtre supplémentaires correspondant à des segments à proximité du segment auquel correspond la prise de filtre particulière, lorsque l'énergie d'interférence totale des prises de filtre dans le groupe de prises de filtre d'un bloc de prises de filtre comprenant la prise de filtre particulière, correspondant à des segments à proximité du segment auquel correspond la prise de filtre particulière, qui sont mises sous tension, dépasse un second seuil prédéterminé supérieur au premier seuil prédéterminé.
